# EUROPEAN PATENT APPLICATION

(11) **EP 0 777 129 A1**
(43) Date of publication of application: **04.06.1997**
(21) Application number: 96308548.5
(22) Date of filing: 27.11.1996
(51) Int. Cl.: G01S 5/14

(54) **GPS receiver**

(30) Priority: 02.12.1995 GB 9524742
(71) Applicant: PLESSEY SEMICONDUCTORS LIMITED, Swindon, Wiltshire SN2 2QW (GB)
(72) Inventor: Minett, Peter John, Swindon, Willtshire SN5 9NH (GB); Fryer, Martin Andrew, Swindon, Willtshire SN5 9FF (GB)
(74) Representative: Waters, Jeffrey

(57) **Abstract**

A GPS receiver calculates its position by generating replicas of time signals transmitted from satellites, by measuring the propagation delays of signals from four satellites in known positions. The local frequency reference is derived from broadcast information, in order to permit the replacement of components such as the oscillator 1 by a cheaper, lower stability component which is continuously corrected by the frequency reference 5 from the radio receiver, which could be a radio data receiver.

## Description

This invention relates to GPS receivers.

With GPS receivers, users can locate their position using signals transmitted from satellites. For example, the GPS Navstar system (described for example in the Handbook of Modern Electronics and Electrical Engineering Ed Charles Belove 1986 John Wiley & Sons Inc., USA, pages 1978-1988) employs twenty-four satellites orbiting the planet. Each satellite transmits a signal at 1.57542 GHz in a code based on a repeated 1023 bit length pattern at 1.023 Mbits/s (the pattern hence lasting 1 ms). The code is repeated in blocks of twenty. Each block of twenty may be transmitted as a 0 or, in inverted form, as a 1, each such block of twenty corresponding to one bit of data. Data is thus transmitted, at 50 bauds, and the data gives information enabling the bits of the code to be accurately timed, together with detailed information on the orbit of the particular satellite from which it is transmitted, and general information on the orbit of the other satellites. The modulation applied is binary phase shift keying i.e. 1's and 0's in the 1023 bit pattern are in antiphase. All the satellites transmit on the same frequency, but the code is different for each one. The oscillators in the satellites have great stability and the clocks are set precisely, so that the bits of the code are accurately timed.

A GPS receiver is able to generate a replica of the 1023 bit code for each satellite. When the receiver is switched on, the first task is for the receiver to calculate, from the time of day and from information on the satellite orbits stored when the receiver was last used, the particular satellites which will be visible and their expected Doppler shifts (resulting from their orbital movement). Since the position of each of the likely visible satellites is unknown, there will be a range of possible Doppler shifts, and there may be a possible range of Doppler shifts due to movement of the receiver (for example, if it is carried in a vehicle). Equally, while the receiver may have an accurate temperature compensated crystal clock as an accurate frequency reference, there will be a certain uncertainty in locally generated frequencies due to the albeit small instability of the crystal clock. This will often be comparable with the Doppler uncertainty.

What this means is that the comparison of the timed satellite signals with locally generated ones, for example, involving conversion of the received satellite signals to IF, must be carried out, not just over a range of possible delays in order to correlate the received and locally generated signals, but also the time correlation process must be repeated over a range of frequencies.

Once correlation has been achieved, the information in the satellite signal can be decoded, and the satellite has been acquired. The satellite transmits detailed information on its own orbit, but also general information on the orbits of the other satellites called the Almanac. Hence the Doppler frequency uncertainty for the other visible satellites can be reduced, and the time to acquire these will be accordingly reduced. In addition, the frequency transmitted from the acquired satellite can be used to improve the estimate of the uncertainty in the local frequency reference (WO-A-94/28434).

Four or more satellites are acquired, and the position of the receiver is calculated. Further, the position is repeatedly calculated so that its position can be updated as required.

In order to reduce the acquisition time of the first satellite, it has been proposed to transmit to the GPS receiver from a differential GPS reference station information on which satellites are visible. (WO-A-94/28434). (A differential GPS reference station is in a known position and receives signals from the satellites and broadcasts correction signals for GPS receivers eg. to compensate for atmospheric changes). This allows the GPS receiver to search only for satellites that will be found and so saves time.

The invention provides a GPS receiver, comprising means for comparing timed signals received from a satellite with a locally generated replica of those timed signals to determine position by reference to the respective propagation delays of the timed signals from a plurality of satellites in known positions, including means for receiving and using a broadcast reference frequency to correct for errors in an internal frequency source in order to assist in acquiring the timed signal from the first satellite when the receiver is operated.

Cheaper, lower stability components can be used for the internal frequency source without the penalty of increased acquisition time for the first satellite, because the frequency search of the GPS receiver can be reduced in line with the reduction in uncertainty of the local frequency reference. Further, any transmitting station, not necessarily a differential GPS reference station, could be used to broadcast the reference frequency.

A GPS receiver constructed in accordance with the invention will now be described, by way of example, with reference to the accompanying drawings, in which:
Figure 1 shows codes received from four different satellites; and
Figure 2 is a block circuit diagram of the receiver.

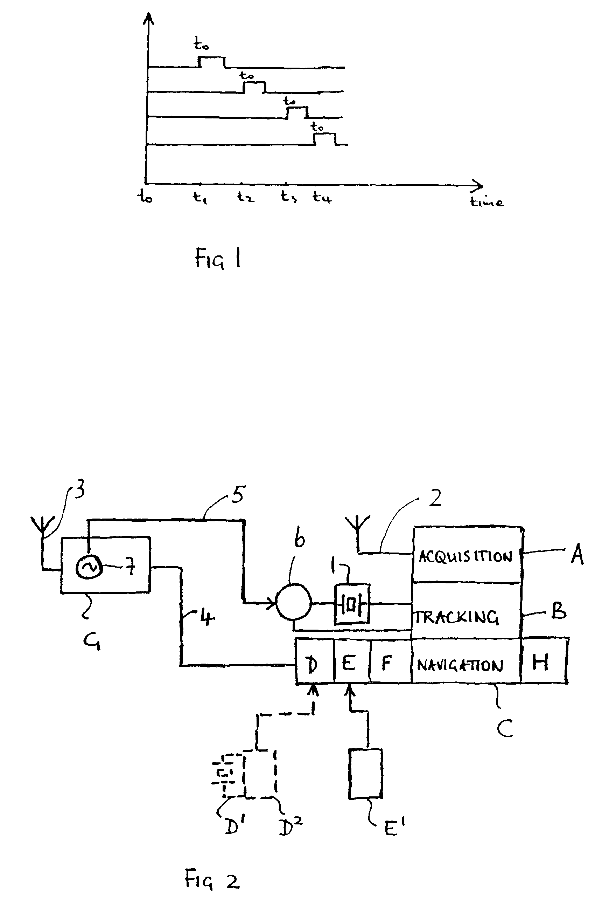

Referring to Figure 1, t₀ represents a particular time at the receiver and t ₁, t ₂, t ₃ and t ₄ represent the later times at which respective signals, the leading edge of each of which was generated at t₀, are received by the receiver. Thus, each square wave represents a small section ofthe 1023 bit code associated with each of the respective four satellites (which of course is transmitted at 1.023 Mbits/s and modulates a carrier at 1.57542 GHz by binary phase shift keying). Section A of the GPS receiver is responsible for acquiring via antenna 2 each of the signals from the satellites. Thus, when the GPS receiver is switched on, as has been stated hereinbefore, the receiver uses its time reference to establish the time of day to calculate from the stored satellite orbit details, which satellites are in view, as well as the possible range of Doppler shifts for those satellites. Knowing the uncertainty of its frequency reference, a range of frequencies is defined through which oscillators in the acquisition circuitry must sweep in order to be able to lock onto the frequency of each incoming signal. Then, various values across the range of frequencies are chosen, and time correlation is carried out between the incoming signal (at IF) and the code corresponding to one of the visible satellites (at the same frequency). If no correlation is achieved at the first value of frequency, the procedure is repeated at the second value of frequency in the range, and so on.

When correlation is achieved, the received signal from the satellite with that particular code can be decoded, and the satellite has been acquired. The receiver is now generating a timed signal modulated by 0s and 1s in synchronism (the code phase is the same) with that received and converted to IF in the receiver.

The data on the received signal indicates that the leading edge was transmitted at time t₀ and, since the data transmitted gives the position of the satellite, the propagation delay is known.

Section B of the GPS receiver is provided to enable the satellite to be tracked, because the receiver may be moving in different directions relative to the satellite with the result that the received frequency changes in accordance with a Doppler effect. It is therefore necessary to implement a control loop for both carrier frequency and code phase and section B, which is implemented by a microprocessor, is therefore carrying out repeated adjustments of the code phase and carrier frequencies depending on the errors output by the control loop. The frequency search must also encompass uncertainty in the local crystal oscillator 1 which is used to generate the codes and the carrier on which they are modulated. Once the locally generated signal tracks that received from one satellite, the same process can be carried out for other satellites, but the data acquired from the first satellite also gives general information (the Almanac) on the orbits of the other satellites and the process of correlation and frequency tracking for the other satellites takes less time since the time and frequency search take place over narrower ranges. This is assisted because the frequency transmitted from the acquired satellite is used to improve the estimate of the uncertainty in the local frequency reference.

Data from each satellite contains precise orbital parameters, so that the satellite position can be calculated in section F. The Navigation Solution section C then uses the timing information from B and the position information from F to calculate the user position, which is stored in section E. The user position is output, and the calculated error in the crystal oscillator 1 is stored in section H.

Since four or more satellites are being tracked, the time of day of the user can be calculated from the satellite signals, and this is stored in section D.

Section E is connected to a non-volatile memory E¹ which is given the last user position determined and also stores the satellite Almanac data.

The information in sections D, E and H is for use when the receiver is next switched on.

In a conventional GPS receiver the time of day section D of the receiver is connected to a watch crystal D¹ and a watch-like time counter D². In addition, crystal 1 is temperature controlled in order to provide the best stability and hence the least frequency search necessary to maintain tracking.

The GPS receiver can also include receiver section G connected to antenna 3 adapted to receive GPS differential correction signals which may be broadcast from a land beacon or from a satellite. The differential correction signals are corrections for errors in the GPS system (natural such as changes in the layers of the atmosphere and artificial such as deliberate degradation of the GPS signals introduced by the operators of GPS).

Differential GPS signals rely on the use of a reference station of known position which receives signals from the satellites. The receiver includes an AFC controlled reference crystal 7.

As an alternative, the radio receiver G may be adapted to receive FM signals broadcast as part of the radio data system (RDS) in a band centred on a subcarrier at around 57 kHz, or signals broadcast in a band centred on a subcarrier at about 66.5 kHz used for paging. Alternatively, the receiver may be adapted to receive medium frequency radio signals centred around a 300 kHz for broadcasting time signals for marine purposes, or a low frequency signal for example the time signal carried by the BBC Radio 4 transmitter and used for adjusting time switches. As a further alternative, the receiver G could be adapted for receiving GSM (the Pan-European Digital Cellular Radio system) transmissions.

According to the present invention, reference information received by the receiver G is used to assist in acquiring the timed signal from the first satellite to be acquired when the receiver is operated i.e. on start-up.

The reference information consists of time signals sent on line 4 and/or frequency signals sent on line 5. Thus, it will be recalled that acquisition of the first satellite entails carrying out the time correlation procedure at a number of spot frequencies over a range of frequencies which range depended partly on the range of instability of the crystal oscillator 1. For this reason, it was usual in GPS receivers to use a temperature-controlled crystal for this purpose. In accordance with the invention a cheaper crystal of lower stability (say 100ppm rather than 2ppm) is used, but frequency comparator 6 uses frequency information from the DGPS/RDS etc to correct for drift in this crystal. The frequency information may be the carrier frequency, or alternatively two time-of-day measures can be used in a timer to measure the error in crystal 1. By correcting for deficiencies in the crystal 1, it is possible to obtain a faster lock than hitherto.

In order to reduce further the time taken to acquire the first satellite, detailed information on the orbit parameters (the so-called Ephemerides which as the name suggests go out-of-date relatively quickly) could be transmitted from the transmitter that transmits the reference frequency, received by receiver G and passed to non-volatile memory E¹ which already stores the coarse orbit parameters (the Almanac). The fine orbit parameters thus received could be used to reduce the frequency search knowing the satellites in view and their Doppler shifts. This would give the receiver a very fast start. Indeed, both Almanac and Ephemerides could be transmitted to the GPS receiver if desired, making storage of the Almanac unnecessary.

As a means of using off-air signals as a reference for the frequency comparator, the AFC controlled reference crystal of the RDS/GPS receiver could be used, or a single crystal could be used for both receiver C and receiver G, and it would be possible to correct the crystal for drift using off-air signals.

As an alternative or as a supplement to use of an off-air frequency reference, an off-air time reference can be used, and in this case, the watch-like crystal D¹ and watch-like counter D² which are normally provided in a GPS receiver to establish time of day, may be dispensed with altogether. The time references are already present in RDS as CT codes, and in the medium, low frequency, and cellular radio system, and it would be possible to add them to normal DGPS messages. Equally, if the receiver G is for GSM or FM or MF time signals, DGPS signals could be added and the receiver adapted to provide differential global positioning corrections.

The off-air time reference is fed directly to section D. Previously, it would have been necessary to keep this section running at all times, even when other sections of the GPS receiver were switched off in sleep mode, in order that the time-of-day moves on. This would have meant that there was some power drain at all times and also a battery would have to have been permanently connected. This is avoided by the invention.

A side benefit ofthe system is that it would provide an accurate time signal even when not tracking GPS. This could be used to run a display or for other applications.

The receiver described is particularly suited to use in motor land vehicles, but could also be used in marine vehicles. Indeed, in the case of cars, many cars are already equipped with RDS, and the additional expenditure to provide the GPS tracking facility would be correspondingly less. The output ofthe GPS receiver could be used for vehicle navigation systems.

Of course, it is not necessary for the GPS receiver to receive both time and frequency references from the radio receiver. Some advantage would be gained by simply using a time signal in place of a watch crystal or a frequency signal to allow use of a cheaper crystal oscillator on its own.

The invention is not limited to the Navstar global positioning system but applies to other global positioning systems such as Glonass and systems proposed by Inmarsat.

## Claims

1. A GPS receiver, comprising means for comparing timed signals received from a satellite with a locally generated replica of those timed signals to determine position by reference to the respective propagation delays of the timed signals from a plurality of satellites in known positions, including means for receiving and using a broadcast reference frequency to correct for errors in an internal frequency source in order to assist in acquiring the timed signal for the first satellite when the receiver is operated.

2. A GPS receiver as claimed in claim 1, in which the broadcast receiving means including a frequency comparator for comparing an off-air reference frequency with a local clock frequency of the GPS receiver.

3. A GPS receiver as claimed in any one of claims 1 to 3, in which the broadcast receiving means is also arranged to receive a time-of-day reference.

4. A GPS receiver as claimed in any one of claims 1 to 3, in which the broadcast receiving means is also arranged to receive orbit parameters.

5. A method of positioning which comprises comparing timed signals received from a satellite with a locally generated replica of those timed signals to determine position by reference to the respective propagation delays of the timed signals from a plurality of satellites in known positions, in which a broadcast reference frequency is received and used to correct for errors in an internal frequency source in order to assist in acquiring the timed signal for the first satellite when the receiver is operated.

6. A method as claimed in claim 5, in which the off-air reference frequency is compared with a local clock frequency of the GPS receiver using a frequency comparator.

7. A method as claimed in claim 5 or claim 6, in which off-air orbit parameters are used to assist in acquiring the timed signal for the first satellite when the receiver is operated.

8. A method as claimed in any one of claims 5 to 7, in which in addition a time-of-day reference is received and used to assist in acquiring the timed signal.
